# EUROPEAN PATENT SPECIFICATION

(11) **EP 3 144 093 B1**
(45) Date of publication and mention of the grant of the patent: **08.08.2018**
(21) Application number: 15185470.0
(22) Date of filing: 16.09.2015
(51) Int. Cl.: B23K 11/11, B23K 11/30, G01N 29/00, B23K 101/00, B23K 101/18

(54) **WELDING ELECTRODE WITH BUILT-IN ULTRASONIC PROBE FOR A CAPACITOR DISCHARGE WELDING DEVICE AND CAPACITOR DISCHARGE WELDING DEVICE**
SCHWEISSELEKTRODE MIT EINGEBAUTER ULTRASCHALLSONDE FÜR EINE KONDENSATORIMPULSSCHWEISSVORRICHTUNG SOWIE KONDENSATORIMPULSSCHWEISSVORRICHTUNG
ÉLECTRODE DE SOUDAGE AVEC SONDE ULTRASONORE INTÉGRÉE POUR UN DISPOSITIF DE SOUDAGE PAR DÉCHARGE DE CONDENSATEUR ET UN TEL DISPOSITIF

(43) Date of publication of application: 22.03.2017
(73) Proprietor: Dr. Ing. h.c. F. Porsche AG, 70435 Stuttgart (DE); Tessonics Inc., Windsor, Ontario N9A 4J3 (CA)
(72) Inventor: TEGTMEIER, Andre, Dr., 04827 Machern (DE); GEßLER, Robert, 04129 Leipzig (DE); LEHMANN, Nico, 39264 Lübs (DE); STERZIK, Tim, 04109 Leipzig (DE); MAEV, Roman Gr., Prof. Dr., Windsor, Ontario N9E 4R5 (CA); CHERTOV, Andriy M., Dr., Windsor, Ontario N9B 3W4 (CA)
(74) Representative: Sturm, Christoph

(56) References cited:
- EP-A1- 2 221 137
- DE-A1-102005 031 750
- JP-A- 2006 043 727
- US-A- 3 410 983
- US-A- 4 918 990

## Description

The present invention relates to a welding electrode for a capacitor discharge welding device according to the preamble of claim 1 (see, for example, DE10 2005 031 750 A1). Methods and devices for capacitor discharge welding, which represents a further development of conventional resistance welding, are known from the prior art. In the case of resistance welding, a joining connection is produced by a welding current being passed by means of two welding electrodes through two workpieces that are to be connected to one another in a material-bonding manner. This welding current leads to a local input of heat into the workpieces, so that at a welding location there locally forms a pool of molten metal, which is of a convex, lenticular form and is consequently often also referred to as a weld nugget.

The conventional resistance welding with direct current or high-frequency or medium-frequency alternating current has the disadvantage that thermal energy can unintentionally escape from the joining plane during the welding process, since the energy is input partly into the parent material of the workpieces and into the electrode caps of the welding electrodes and is output into the surroundings.

In particular in the case of high-alloy, press-hardened or heavily coated steel materials, high temperatures have to be maintained over the entire welding time for successful joining by welding. Capacitor discharge welding is suitable in a particularly advantageous way for such materials. In the case of capacitor discharge welding, the high electrical energy that is required for melting the material at the welding location results from a pulse-like discharge of at least one capacitor or a plurality of capacitors connected in parallel with one another, which may for example form so-called capacitor banks. Heat losses occurring during the joining process can be compensated in particular by varying the process parameters of the welding voltage and/or the welding current over the welding time, which is typically > 180 ms.

Apart from a minimized input of heat into the welding location, a further advantage of capacitor discharge welding is synchronous loading of an electrical power supply network. Since the capacitors or the capacitor banks charge themselves uniformly and symmetrically during the breaks in welding, the power drawn from the electrical power supply network is constant, and consequently does not have any load peaks. In addition, the alteration in the metallurgy of the parts to be joined on account of the heating up at the welding location over the welding time may have an adverse influence on the strength of the welded connection, for example due to a softening in the heat input zone. Generally, the introduction of energy via the connection to the electrical power supply network involves relatively high costs, with only a relatively small proportion of the necessary welding energy being necessary for forming the actual weld nugget. In the case of capacitor discharge welding, very high welding currents in conjunction with a steep increase in current and very short welding times can be realized with a comparatively low charging voltage of the at least one capacitor.

In order in the case of resistance welding processes, which include the previously explained capacitor discharge welding, to obtain information about the quality (in particular the forming, shape and position) of the welded connection already during the joining process as part of an online process monitoring, it is known from the prior art to subject the welding location to ultrasonic waves. In this case, a distinction is drawn between an ultrasonic through-transmission method and an ultrasonic pulse-echo method. In the case of the ultrasonic through-transmission method, an ultrasonic transmitter means is respectively arranged in one of the two welding electrodes and an ultrasonic receiver means is respectively arranged in the other of the two welding electrodes. When the ultrasonic through-transmission method is used for the process monitoring of welded connections that are obtained by capacitor discharge welding, information concerning the position, size, shape and forming of the welding location (weld nugget) is obtained by means of a computer-based evaluation device by recording the transit times and the wavelengths of the ultrasonic waves emitted by the ultrasonic transmitter means and received by the ultrasonic receiver means after they have passed through the welding location. In this case, an ultrasound pulse repetition frequency of for example over 10 kHz is preferably used, so that during the relatively short welding cycle in the case of capacitor discharge welding a sufficiently high number of ultrasound signals are emitted by the ultrasonic transmitter means and received by the ultrasonic receiver means. With a welding time of for example 20 ms and a pulse repetition frequency of for example 10 kHz, computationally a maximum of 200 detected ultrasound signals can be processed to assess the welding process.

In the case of the ultrasonic pulse-echo method, the welding location is likewise subjected to a series of ultrasound pulses during the welding process, in order in this way to obtain information concerning the distinctive characteristics of the welding location. That part of the sound energy that is reflected by reflections at boundary surfaces returns in an attenuated form to the same ultrasonic testing head and is converted into an electrical signal. This allows an analysis of the reflection signature of the ultrasound echo at various points in time, from which quality attributes, such as for example the position of the welding location and the residual wall thickness of the parts to be joined, can be determined.

In order to introduce the ultrasonic waves emitted by the ultrasonic testing head into the region of the welding location, the ultrasonic testing head must be acoustically coupled with the aid of a sound-conducting coupling agent. In previous applications of ultrasound for process monitoring and quality control during conventional resistance spot welding, the cooling water of the welding electrodes is used as a coupling agent for the ultrasonic waves.

A welding electrode for a resistance welding device with an integrated ultrasonic testing head which is designed for transmitting and/or receiving ultrasound signals is known for example from EP 1 478 486 B1. The welding electrode is suitable for checking the quality of a welding location by the ultrasonic through-transmission method or the ultrasonic pulse-echo method. Provided within the welding electrode is a cooling water circuit, by means of which the ultrasonic testing head can be coupled to the welding location.

DE 10 2005 031 750 A1 discloses a welding electrode having an electrode shank with a connecting portion, a welding cap, which is attached to the connecting portion of the electrode shank, and an ultrasonic testing head. The welding electrode makes use of cooling fluid flowing through a cavity. The ultrasonic testing head in in contact with the the welding cap.

US 4 918 990 A discloses a ultrasonic transducer assembly. This ultrasonic transducer assembly comprises an electrode tip and a shank. A fluid couplant is positioned between the transducer assembly and the electrode tip.

US 3 410 983 A and JP 2006 043727 A disclose other prior art.

The present invention addresses the problem of providing a welding head and a capacitor discharge welding device of the type mentioned at the beginning that allow efficient quality control of capacitor discharge welded connections during the joining process.

The solution to this problem is provided by a welding head of the type mentioned at the beginning with the features of the characterizing part of claim 1.

With regard to the capacitor discharge welding device, this problem is solved by a capacitor discharge welding device of the type mentioned at the beginning with the features of the characterizing part of claim 5. The subclaims concern advantageous developments of the invention.

A welding head according to the invention is distinguished by the fact that the welding electrode comprises a closable fluid reservoir or a capsule, within which the ultrasonic testing head is accommodated and which is at least partially filled with a sound-conducting liquid or solid coupling agent.

The invention is based on the recognition that, in the case of capacitor discharge welding, in which the welding energy for forming the welded connection is stored in a capacitor or in a number of capacitors connected in parallel, it is possible to dispense with active water cooling of the welding electrodes. By means of the ultrasonic testing head, which is either embedded completely in the sound-conducting liquid coupling agent, or coupled by means of sound-conducting solid, the quality of the welding location can be monitored during the welding process by ultrasonic inspections. Since the ultrasonic testing head is acoustically coupled with the aid of a sound-conducting coupling agent, ultrasonic waves can be effectively introduced into the region of the welding location.

If only one welding electrode of the capacitor discharge welding device has an ultrasonic testing head, the welding location can be inspected by means of an ultrasonic pulse-echo method. If both welding electrodes of the capacitor discharge welding device have an ultrasonic testing head, the welding location can be inspected by means of an ultrasonic through-transmission method.

In case when sound-conducting liquid coupling agent is used in the fluid reservoir, or capsule, it is at least partially filled with a liquid or fluid, for example water or a sound-conducting gel, or a mixture comprising water and the sound-conducting gel, or any other sound-conducting liquid or fluid. These coupling agents allow easy and uncomplicated handling.

In case when sound-conducting solid coupling agent, e.g. coupling agent made from a rubber or rubber-like material, is used in the capsule, the transducer is coupled to the sample by means of solid layer, for example sound-conducting resin, or polymer or any other solid sound-conducting substance. These coupling agents allow easy and uncomplicated handling.

The fluid reservoir, or the capsule, within the electrode shank extends into an intermediate space, which is formed between the connecting portion and an electrode cap base. As a result, the acoustic coupling of the ultrasonic testing head to the welding location with the aid of the coupling agent is further improved. In order to prevent the possibility of the electrode cap being pushed too far onto the connecting portion of the electrode shank under high welding forces, and as a result coming into contact with the ultrasonic testing head and under some circumstances thereby damaged, the ultrasonic testing head is, according to the present invention, arranged within the connecting portion in such a way that an end of the ultrasound testing head that is facing the electrode cap base does not protrude outwardly beyond the connecting portion.

In a preferred embodiment it is provided that a constant pressure controlling means, which is designed for controlling a constant pressure of the coupling agent within the fluid reservoir, or the capsule, is arranged within the fluid reservoir, or the capsule. The constant pressure controlling means may preferably be formed as an elastic element. If the electrode cap butts against the electrode shank during the welding operation, for example on account of an excessive pressing force, the constant pressure controlling means has the task of equalizing the resultant increase in pressure of the coupling agent. Filling of the fluid reservoir with the coupling agent may take place after the manual fitting/changing of the electrode cap. In this case, first the constant pressure controlling means is removed from the fluid reservoir, or the capsule. Then the fluidic, sound-conducting coupling agent is filled into the fluid reservoir, or solid sound-conducting coupling agent is inserted into the capsule. After that, the constant pressure controlling means is then inserted again into the fluid reservoir, or the capsule.

The electrode shank may preferably have a first lateral bore, in which a valve means is arranged. The valve means may be formed in particular as a pressure-relieving valve means, which is designed such that it can open of its own accord when an excess pressure occurs within the fluid reservoir, so that part of the coupling agent can escape from the fluid reservoir.

A capacitor discharge welding device according to the invention is distinguished by the fact that at least one of the welding electrodes is formed as claimed in one of claims 1 to 4. By means of the correspondingly configured welding electrode, the quality of the welding location can be analyzed already during the joining process in an easy way by an ultrasonic pulse-echo method. If both welding electrodes are formed as claimed in one of claims 1 to 4, an ultrasonic through-transmission method can be used in order to inspect the quality of the welding location. The capacitor discharge welding device according to the invention advantageously allows energy-efficient resistance welding without water cooling by the capacitor discharge technique, with simultaneous monitoring of the joining result by an ultrasonic measuring method. The capacitor discharge welding device may preferably comprise a temperature recording device, which is arranged at a distance from the welding electrodes and is designed for recording electromagnetic radiation in the infrared spectral range. The temperature recording device may be formed in particular as a pyrometer. By this measure it is possible for example to prevent imminent overheating of the ultrasonic testing head integrated in at least one of the welding electrodes. In this case, the temperature of the welding cap of the welding electrode concerned is monitored from the outside, preferably by a contactless measuring method. Apart from the lifetime of the electrode caps of the welding electrodes, the joining process itself can also be monitored with the aid of the contactless temperature monitoring. If appropriate, the set welding process parameters of the welding device (in particular the pressing force of the welding electrodes and also the charging voltage of the at least one capacitor) can be adapted such that an undesired alloying of the electrode caps onto the workpieces to be welded to one another when the melting temperature of the material from which the electrode caps are produced is exceeded can be avoided. Furthermore, possible overheating of the electrode caps can be advantageously monitored, and unnecessarily premature wear of the electrode caps can be avoided.

In order to protect the temperature recording device from welding spatter and other external influences, in a preferred embodiment it may be provided that a protective screen is arranged between the temperature recording device and at least one of the welding electrodes.

In a particularly preferred embodiment, the protective screen may be produced from quartz sand.

Further features and advantages of the present invention become clear from the following description of preferred exemplary embodiments with reference to the accompanying figures, in which:
- Figure 1: shows a schematic representation of a welding electrode, for a capacitor discharge welding device which is configured according to a preferred exemplary embodiment of the present invention,
- Figure 2: shows a schematic representation of a capacitor discharge welding device which is configured according to a preferred exemplary embodiment of the present invention.

The invention relates to a welding electrode with built-in ultrasonic probe for a capacitor discharge welding device and to a capacitor discharge welding device.

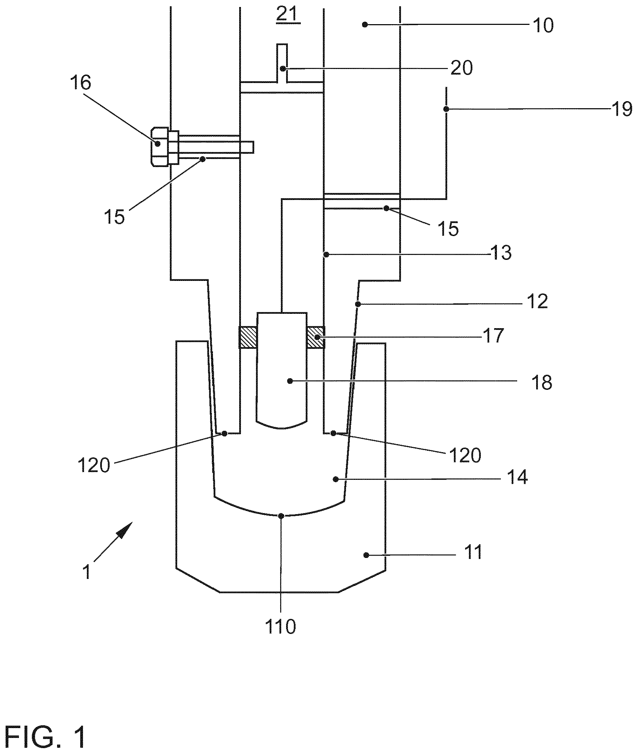

With reference to Figure 1, a welding electrode 1, which is configured according to a preferred exemplary embodiment of the present invention, comprises an electrode shank 10 with a welding cap 11 attached thereto, which during the operation of the welding electrode 1 is brought into electrical contact with one of two workpieces to be welded to one another. The electrode shank 10 has a conical connecting portion 12, on which the electrode cap 11 is fitted. According to the present invention, the welding electrode 1 also has a closable fluid reservoir, or a capsule 13, which extends within the electrode shank 10 into an intermediate space, which is formed between a free end 120 of the connecting portion 12 and an electrode cap base 110. The fluid reservoir, or the capsule 13 has been filled with a fluidic respectively liquid, sound-conducting coupling agent 14, or solid sound conducting layer. This sound-conducting coupling agent 14 may be, for example, water, or a sound-conducting gel or a mixture comprising water, and the sound-conducting gel, or resin or polymer or other sound-conducting solid substance. For example, the liquid coupling agent may be a mixture of water with a defined amount of a water solubale substance. For example the solid coupling agent may be a resin or elastic polymer or other solid substance.

The electrode shank 10 has a first lateral bore 15, which extends in the radial direction from the outside through a wall of the electrode shank 10 and opens out into the fluid reservoir 13. Inserted into the first lateral bore 15 is a valve means 16, which can be selectively opened or closed and may be formed in particular as a pressure-relieving valve means that opens of its own accord when there is excess pressure within the fluid reservoir 13. In case of solid coupling agent, the valve is not used.

Arranged within the fluid reservoir, or the capsule 13, in the region of the conical connecting portion 12 of the electrode shank 10, is a holding device 17, which is designed for holding an ultrasonic testing head 18, which is designed for transmitting and/or receiving ultrasonic waves. The ultrasonic testing head 18 is positioned inside the portion formed within the electrode shank 10 - preferably inside the connecting portion 12 - of the fluid reservoir, or the capsule 13 instead of the cooling water tube that is provided in the case of a conventional water-cooled welding electrode, in such a way that the distance between the electrode cap base 110 and the ultrasonic testing head 18 is as small as possible. In this case, the possibility of the electrode cap 11 being pushed too far onto the conical connecting portion 12 of the electrode shank 10 under high welding forces, and as a result coming into contact with the ultrasonic testing head 18 and under some circumstances thereby damaged, should be avoided. According to the present invention, and as shown here, the position of the ultrasonic testing head 18 within the conical connecting portion 12 is chosen such that the end of the ultrasonic testing head 18 that is facing the electrode cap base 110 does not protrude outwardly beyond the opening formed by the free end 120 of the conically shaped connecting portion 12.

Connected to the ultrasonic testing head 18 is a signal line 19, which extends through the electrode shank 10 and is led laterally through a second bore 15', which extends in the radial direction through the electrode shank 10. In order to prevent an undesired escape of the fluidic coupling agent 14 from the second bore 15', the latter is formed so as to be fluid-tight with the aid of at least one sealing means.

Also arranged within the fluid reservoir 13, on a side opposite from the electrode cap base 110, is a constant pressure controlling means 20, which is designed for controlling a constant pressure of the coupling agent 14 within the fluid reservoir 13. The constant pressure controlling means 20 is preferably formed as an elastic element. Filling of the fluid reservoir 13 with the coupling agent 14 takes place after manual fitting/changing of the electrode cap 11. In this case, first the constant pressure controlling means 20 is removed from the fluid reservoir 13. Then the fluidic, sound-conducting coupling agent 14 is filled into the fluid reservoir 13 through a filling opening 21 at the end of the electrode shank 10. Then the constant pressure controlling means 20 is inserted again into the fluid reservoir 13. If the electrode cap 11 butts against the electrode shank 10 during the welding operation, for example on account of an excessive pressing force, the constant pressure controlling means 20 has the task of equalizing the resultant increase in pressure of the coupling agent 14.

In case when solid coupling agent is used, no pressure controlling means is needed.

The welding electrode 1 described here does not have active cooling by means of a cooling circuit that is flowed through by a liquid cooling medium, and is consequently suitable for use in a capacitor discharge welding device 100.

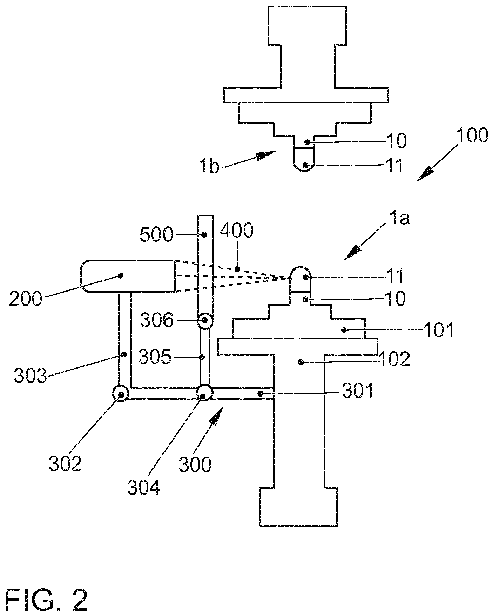

With reference to Figure 2, such a capacitor discharge welding device 100 for the capacitor discharge welding of two workpieces is to be explained in more detail hereafter. The capacitor discharge welding device 100 comprises a first welding electrode 1a and a second welding electrode 1b, which are connected to at least one capacitor, which is not explicitly represented here, or to a plurality of capacitors connected in parallel with one another, which may form one or more capacitor banks. A first welding electrode 1a (the lower one in this representation) is arranged on a welding bench 101, which for its part is attached to a floor cylinder 102. During operation, two workpieces to be welded to one another are introduced into an intermediate space between the two welding electrodes 1a, 1b. Then each of the two welding electrodes 1a, 1b is respectively brought into contact with one of the workpieces to be welded to one another, so that an electrical current can flow through the two welding electrodes 1a, 1b and the workpieces arranged between them. In the case of capacitor discharge welding, very high welding currents, which flow through the welding electrodes 1a, 1b, in conjunction with a steep increase in current can be produced in very short welding times with a comparatively low charging voltage.

At least one of the two welding electrodes 1a, 1b has a structure which corresponds to that of the welding electrode 1 described above with reference to Figure 1. If only one of the two welding electrodes 1a, 1b has such a structure with an ultrasonic testing head 18 embedded in the coupling agent 14, the quality of the welded connection can be analyzed by an ultrasonic pulse-echo method. In this case, the welding location is subjected to a series of ultrasound pulses during the welding process, in order in this way to obtain information concerning the distinctive characteristics and quality of the welding location. That part of the sound energy that is reflected by reflections at boundary surfaces in the region of the welding location returns in an attenuated form to the ultrasonic testing head 18 and is converted into an electrical signal, which is made available to a computer-based evaluation device by way of the signal line 19. This allows an analysis of the reflection signature of the ultrasound echo at various points in time, from which quality attributes, such as for example the position of the welding location and the residual wall thickness of the parts to be joined, can be determined.

If both welding electrodes 1a, 1b are formed like the welding electrode 1 that is represented in Figure 1 and described above, and consequently respectively have an ultrasonic testing head 18 embedded in the coupling agent 14, the quality of the welding location can be determined by an ultrasonic through-transmission method. In this case, the ultrasonic testing head 18 of one of the two welding electrodes 1a, 1b forms an ultrasonic transmitter means, which can emit ultrasonic waves. By contrast, the ultrasonic testing head 18 of the other of the two welding electrodes 1a, 1b forms an ultrasonic receiver means, which can receive ultrasonic waves after they have passed through the welding location. By recording the arrival times of reflections from electrode-workpiece boundaries, reflections from liquid-solid boundaries of the weld pool, and the wavelengths of the ultrasonic waves emitted by the ultrasonic testing head 18, serving as an ultrasonic transmitter means, and received by the ultrasonic testing head 18, serving as an ultrasonic receiver means, of the other of the two welding electrodes 1a, 1b, information concerning the position, size, shape and forming of the weld nugget can be determined by means of a computer-based evaluation device. In this case, an ultrasound pulse repetition frequency of for example over 1 kHz is typically used, so that during the comparatively short welding cycle in the case of capacitor discharge welding a sufficiently high number of ultrasound signals can be emitted and received. With a welding time of for example 20 ms and a pulse repetition frequency of for example 10 kHz, computationally a maximum of 200 detected ultrasound signals can be processed to assess the welding process.

Since in the case of capacitor discharge welding it is possible to weld without active water cooling, the temperature of the electrode cap 11 of the first (lower) welding electrode 1a is contactlessly recorded and monitored by means of a temperature recording device 200, which is designed for recording infrared radiation 400. The temperature recording device 200 may be formed in particular as a pyrometer. The capacitor discharge welding device 100 has a holding device 300, to which the temperature recording device 200 is attached at a distance from the welding electrodes 1a, 1b.

In the exemplary embodiment shown here, the holding device 300 has a preferably tubularly formed supporting element 301, which is attached to the floor cylinder 102 of the welding device 100 and extends orthogonally away from it. Arranged at a free end of the supporting element 301 is a first articulating means 302, attached to which is a first holding element 303, to which the temperature recording device 200 is fastened. Arranged on the supporting element 301 between the free end of the supporting element 301 and the floor cylinder 102 is a second articulating means 304, to which a second holding element 305 is attached. Arranged at a free end of the second holding element 305 is a third articulating means 306, to which a protective screen 500 is attached. The three articulating means 302, 304, 306 allow easy adjustment of the components connected thereto. The protective screen 500, which may for example be produced from quartz sand, serves the purpose of protecting the sensitive optical elements of the temperature recording device 200, for example from welding spatter or other external influences.

The sampling frequency in the contactless infrared temperature recording by means of the temperature recording device 200 must be sufficiently high that as large a number as possible of measured temperature values are available for the calculation of a mean temperature value during the typically only very short welding process. With an effective measuring time of for example 100 µs to 150 ps, between 200 and 133 temperature values can be recorded in the case of a welding time of 20 ms.

Apart from the lifetime of the electrode caps 11 of the welding electrodes 1a, 1b, the joining process itself can also be monitored with the aid of the contactless temperature monitoring. If appropriate, the set welding process parameters of the welding device 100 (in particular the pressing force of the welding electrodes 1a, 1b and also the charging voltage of the at least one capacitor) can be adapted such that an undesired alloying of the electrode caps 11 onto the workpieces to be welded to one another when the melting temperature of the material from which the electrode caps 11 are produced is exceeded can be effectively avoided.

Although the measuring spot is located on the surface of the electrode cap 11 of the first welding electrode 1a, unwanted welding spatter can be detected by means of the temperature recording device 200. If a measured temperature value exceeds a predefined maximum threshold value, the welding operation is interrupted until an uncritical temperature is reached again as a result of the air cooling of the welding electrodes 1a, 1b. This advantageously allows overheating to be monitored and unnecessarily premature wear of the electrode caps 11 of the welding electrodes 1a, 1b to be monitored or avoided.

In the definition of the profile of technical requirements for the temperature recording device 200, it should be ensured that the measuring spot at a given minimum distance from the measuring location is smaller than the electrode cap 11, so that exclusively the temperature of the electrode cap 11 is contactlessly recorded. In order to ensure a temperature measurement that is as exact as possible, the temperature-dependent emission coefficient of the material (for example CuCrZr, CuNiSi) should be set for the temperature measuring range in the temperature recording device 200. If there is increased wear, there is the possibility of discoloration of the electrode cap 11. The contactlessly detected tarnishing of the electrode cap 11 can be used as an indication of the state of wear.

## Claims

1. A welding electrode (1) for a capacitor discharge welding device (100), comprising
an electrode shank (10) with a connecting portion (12), the connecting portion (12) having a free end (120),
a welding cap (11), which is attached to the connecting portion (12) of the electrode shank (10), the welding cap (11) having an electrode cap base (110), and
an ultrasonic testing head (18) for transmitting and/or receiving ultrasonic waves, which is arranged within the electrode shank (10),
**characterized in that**
the welding electrode (1) comprises a closable fluid reservoir or a capsule (13) extending within the electrode shank (10) into an intermediate space which is formed between the free end (120) of the connecting portion (12) and the electrode cap base (110) of the welding cap (11),
the ultrasonic testing head (18) is accommodated within the closable fluid reservoir or a capsule (13) and is arranged within the connecting portion (12) in such a way that an end of the ultrasonic testing head (18) that is facing the electrode cap base (110) does not produte outwardly beyond an opeing formed by the free end (120) of the connecting portion (12),
and
the closable fluid reservoir or a capsule (13) is at least partially filled with a sound-conducting coupling agent (14).

2. The welding electrode (1) as claimed in claim 1, **characterized in that** the sound-conducting coupling agent is a liquid or fluid or solid, especially water, or a sound-conducting gel or a mixture comprising water and the sound-conducting gel, or resin or polymer or any other solid sound-conducting material.

3. The welding electrode (1) as claimed in claim 1 or 2, **characterized in that**, in case of liquid coupling agent, a constant pressure controlling means (20), which is designed for controlling a constant pressure of the coupling agent (14) within the fluid reservoir (13), is arranged within the fluid reservoir (13).

4. The welding electrode (1) as claimed in one of claims 1 to 3, **characterized in that** the electrode shank (10) has a first lateral bore (15), in which a valve means (16) is arranged.

5. A capacitor discharge welding device (100), comprising a first welding electrode (1a) and a second welding electrode (1b), which are connected to at least one capacitor, **characterized in that** at least one of the welding electrodes (1a, 1b) is formed as claimed in one of claims 1 to 4.

6. The capacitor discharge welding device (100) as claimed in claim 5, **characterized in that** the capacitor discharge welding device (100) comprises a temperature recording device (200), which is arranged at a distance from the welding electrodes (1a, 1b) and is designed for recording electromagnetic radiation in the infrared spectral range.

7. The capacitor discharge welding device (100) as claimed in either of claims 5 and 6, **characterized in that** a protective screen (500) is arranged between the temperature recording device (200) and at least one of the welding electrodes (1a, 1b).

8. The capacitor discharge welding device (100) as claimed in claim 7, **characterized in that** the protective screen (500) is produced from quartz sand.

## Patentansprüche

1. Schweißelektrode (1) für eine Kondensatorentladungsschweißvorrichtung (100), umfassend
einen Elektrodenschaft (10) mit einem Anschlussabschnitt (12), wobei der Anschlussabschnitt (12) ein freies Ende (120) aufweist,
eine Schweißkappe (11), die an dem Anschlussabschnitt (12) des Elektrodenschafts (10) angebracht ist, wobei die Schweißkappe (11) einen Elektrodenkappengrund (110) aufweist, sowie
einen Ultraschallprüfkopf (18) zum Senden und/oder Empfangen von Ultraschallwellen, der innerhalb des Elektrodenschafts (10) angeordnet ist,
**dadurch gekennzeichnet, dass**
die Schweißelektrode (1) ein verschließbares Fluidreservoir oder eine Kapsel (13) umfasst, das/die sich innerhalb des Elektrodenschafts (10) bis in einen Zwischenraum, der zwischen dem freien Ende (120) des Anschlussabschnitts (12) und dem Elektrodenkappengrund (110) der Schweißkappe (11) ausgebildet ist, erstreckt,
der Ultraschallprüfkopf (18) innerhalb des verschließbaren Fluidreservoir oder einer Kapsel (13) untergebracht ist und innerhalb des Anschlussabschnitts (12) derart angeordnet ist, dass ein dem Elektrodenkappengrund (110) zugewandtes Ende des Ultraschallprüfkopfs (18) nicht über eine durch das freie Ende (120) des Anschlussabschnitts (12) gebildete Öffnung nach außen hinwegragt,
und
das verschließbare Fluidreservoir oder eine Kapsel (13) zumindest teilweise mit einem schallleitenden Koppelmittel (14) gefüllt ist.

2. Schweißelektrode (1) nach Anspruch 1, **dadurch gekennzeichnet, dass** das schallleitende Koppelmittel eine Flüssigkeit oder ein Fluid oder ein Feststoff, insbesondere Wasser, oder ein schallleitendes Gel oder eine Wasser und das schallleitende Gel umfassende Mischung oder ein Harz oder ein Polymer oder ein anderes festes schallleitendes Material ist.

3. Schweißelektrode (1) nach Anspruch 1 oder 2, **dadurch gekennzeichnet, dass** im Fall eines flüssigen Koppelmittels innerhalb des Fluidreservoirs (13) ein Konstantdruckregelungsmittel (20) angeordnet ist, das für eine Konstantdruckregelung des Koppelmittels (14) innerhalb des Fluidreservoirs (13) eingerichtet ist.

4. Schweißelektrode (1) nach einem der Ansprüche 1 bis 3, **dadurch gekennzeichnet, dass** der Elektrodenschaft (10) eine erste seitliche Bohrung (15) aufweist, in der ein Ventilmittel (16) angeordnet ist.

5. Kondensatorentladungsschweißvorrichtung (100), umfassend eine erste Schweißelektrode (1a) und eine zweite Schweißelektrode (1b), die an zumindest einen Kondensator angeschlossen sind, **dadurch gekennzeichnet, dass** zumindest eine der Schweißelektroden (1a, 1b) nach einem der Ansprüche 1 bis 4 ausgebildet ist.

6. Kondensatorentladungsschweißvorrichtung (100) nach Anspruch 5, **dadurch gekennzeichnet, dass** die Kondensatorentladungsschweißvorrichtung (100) eine Temperaturerfassungseinrichtung (200) umfasst, die von den Schweißelektroden (1a, 1b) beabstandet angeordnet ist und zur Erfassung elektromagnetischer Strahlung im infraroten Spektralbereich eingerichtet ist.

7. Kondensatorentladungsschweißvorrichtung (100) nach einem der Ansprüche 5 oder 6, **dadurch gekennzeichnet, dass** zwischen der Temperaturerfassungseinrichtung (200) und zumindest einer der Schweißelektroden (1a, 1b) eine Schutzscheibe (500) angeordnet ist.

8. Kondensatorentladungsschweißvorrichtung (100) nach Anspruch 7, **dadurch gekennzeichnet, dass** die Schutzscheibe (500) aus Quarzsand hergestellt ist.

## Revendications

1. Électrode de soudage (1) pour un dispositif de soudage à décharge de condensateur (100), comprenant
une tige d'électrode (10) avec une partie de raccordement (12), la partie de raccordement (12) ayant une extrémité libre (120),
un capuchon de soudage (11), qui est attaché à la partie de raccordement (12) de la tige d'électrode (10), le capuchon de soudage (11) ayant une base de capuchon d'électrode (110), et
une tête de contrôle par ultrasons (18) destinée à émettre et/ou recevoir des ondes ultrasonores, qui est disposée à l'intérieur de la tige d'électrode (10),
**caractérisée en ce que**
l'électrode de soudage (1) comprend un réservoir de fluide fermable ou une capsule (13) s'étendant à l'intérieur de la tige d'électrode (10) dans un espace intermédiaire qui est formé entre l'extrémité libre (120) de la partie de raccordement (12) et la base de capuchon d'électrode (110) du capuchon de soudage (11),
la tête de contrôle par ultrasons (18) est accueillie à l'intérieur du réservoir de fluide fermable ou d'une capsule (13) et est disposée à l'intérieur de la partie de raccordement (12) de telle sorte qu'une extrémité de la tête de contrôle par ultrasons (18) qui fait face à la base de capuchon d'électrode (110) ne fait pas saillie vers l'extérieur au-delà d'une ouverture formée par l'extrémité libre (120) de la partie de raccordement (12), et
le réservoir de fluide fermable ou une capsule (13) est au moins partiellement rempli avec un agent de couplage conduisant les sons (14).

2. Électrode de soudage (1) selon la revendication 1, **caractérisée en ce que** l'agent de couplage conduisant les sons est un liquide ou fluide ou solide, en particulier de l'eau, ou un gel conduisant les sons ou un mélange comprenant de l'eau et le gel conduisant les sons, ou une résine ou un polymère ou tout autre matériau conduisant les sons solide.

3. Électrode de soudage (1) selon la revendication 1 ou 2, **caractérisée en ce que**, dans le cas d'un agent de couplage liquide, un moyen de régulation de pression constante (20), qui est conçu pour réguler une pression constante de l'agent de couplage (14) à l'intérieur du réservoir de fluide (13), est disposé à l'intérieur du réservoir de fluide (13).

4. Électrode de soudage (1) selon une des revendications 1 à 3, **caractérisée en ce que** la tige d'électrode (10) a un premier alésage latéral (15), dans lequel est disposé un moyen faisant vanne (16).

5. Dispositif de soudage à décharge de condensateur (100), comprenant une première électrode de soudage (1a) et une deuxième électrode de soudage (1b), qui sont raccordées à au moins un condensateur, **caractérisé en ce qu'**au moins une des électrodes de soudage (1a, 1b) est formée selon une des revendications 1 à 4.

6. Dispositif de soudage à décharge de condensateur (100) selon la revendication 5, **caractérisé en ce que** le dispositif de soudage à décharge de condensateur (100) comprend un dispositif d'enregistrement de la température (200) qui est disposé à une distance des électrodes de soudage (1a, 1b) et est conçu pour enregistrer un rayonnement électromagnétique dans le domaine spectral des infrarouges.

7. Dispositif de soudage à décharge de condensateur (100) selon l'une ou l'autre des revendications 5 et 6, **caractérisé en ce qu'**un écran protecteur (500) est disposé entre le dispositif d'enregistrement de la température (200) et au moins une des électrodes de soudage (1a, 1b).

8. Dispositif de soudage à décharge de condensateur (100) selon la revendication 7, **caractérisé en ce que** l'écran protecteur (500) est produit à partir de sable de quartz.
